# EUROPÄISCHE PATENTSCHRIFT

(11) **EP 1 927 562 B1**
(45) Veröffentlichungstag und Bekanntmachung des Hinweises auf die Patenterteilung: **01.12.2010**
(21) Anmeldenummer: 07021179.2
(22) Anmeldetag: 30.10.2007
(51) Int. Cl.: B65G 57/24

(54) **Palettierer, insbesondere Portal-Palettierer**
Palletiser, in particular portal palletiser
Palettiseur, en particulier palettiseur à portique

(30) Priorität: 28.11.2006 DE 202006018017 U
(43) Veröffentlichungstag der Anmeldung: 04.06.2008
(73) Patentinhaber: BMS Maschinenfabrik GmbH, 93102 Pfatter (DE)
(72) Erfinder: Mühlbauer, Reinhard, 93102 Griesau (DE)
(74) Vertreter: Graf, Helmut

(56) Entgegenhaltungen:
- DE-A1- 3 009 361
- FR-A- 2 756 550
- US-A- 3 471 036
- US-A- 3 939 994
- US-B1- 6 431 817

## Beschreibung

Die Erfindung bezieht sich auf einen Palettierer und dabei speziell auf einen Portal-Palettierer gemäß Oberbegriff Patentanspruch 1. Ein solcher Palettierer ist aus den Druckschriften DE 30 09 361 A1 und FR 2 756 550 bekannt.

Palettierer dieser Art sind bekannt und dienen beilspielsweise dazu, auf Paletten oder Transportpaletten mehrlagige Stapel aus Verpackungseinheiten, beispielsweise aus Gebinden zu bilden, und zwar in der Form, dass in jeweils einem Arbeitszyklus eine an einer Bereitstellungsposition gebildete Stapellage aus mehreren Verpackungseinheiten oder Gebinden mit einem Greifer an eine Abgabe- oder Stapelposition bewegt und dort auf eine bereitstehende Palette oder auf einen auf dieser bereits gebildeten Teilstapel abgesetzt wird. Insbesondere zur Stabilisierung des Stapels ist es hierbei üblich, zwischen den einzelnen Stapellagen Zwischenlagen anzuordnen, die aus Flachmaterial, beispielsweise Karton bestehen.

Die Druckschrift DE 30 09 361 A1 offenbart eine Vorrichtung zum Palettieren und Depalettieren von Hohlbehältern mit einem ersten Greiferkopf und einem zweiten Greiferkopf die an einem verfahrbaren Wagen angeordnet sind. Der erste Greiferkopf weist nach unten hin eine Vielzahl von mechanischen Greifern auf, die jeweils zum Aufnehmen eines Halses eines Hohlkörpers ausgebildet sind. Der zweite Greiferkopf ist plattenartig ausgebildet und weist nach unten hin Saugluftöffnungen auf. Über diese Saugtuftöffnungen kann an seiner Unterseite durch Saugwirkung eine Zwischenlage angesaugt werden. Durch das Verfahren des Wagens werden beide Greiferköpfe gleichzeitig verfahren. Für den Fall, dass der erste Greiferkopf sich in der Position zur Aufnahme der Hohlkörper befindet, steht der zweite Greiferkopf über der zu bestückenden Palette, so dass eine vom zweiten Greiferkopf unter Saugwirkung gehaltene Zwischenlage auf eine Lage von Hohlkörpern aufgelegt werden kann. In der Abgabeposition des ersten Greiferkopfs befindet sich der zweite Greiferkopf in der Aufnahmeposition über dem Stapel von Zwischenlagen.

Die Druckschrift FR 2 756 550 offenbart ein Verfahren zur Palettierung von Behältern beispielsweise Fletschen. Das Verfahren umfasst das Ergreifen der Behälter an der Aufnahmestation mittels Greiferarmen und das gleichzeitige Absetzen einer Zwischenlage auf der Stapelstation mittels eines weiteren Greifers. Beim Aufnehmen der Behälter mittels der Greifer befinden sich die Greifer oberhalb der Stapelstation zur Ablage einer Zwischenlage.

Aufgabe der Erfindung ist es, einen Portal-Palettierer aufzuzeigen, der bei vereinfachter konstruktiver Ausbildung das Einbringen der Zwischenlagen ermöglicht.

Zur Lösung dieser Aufgabe ist ein Portal-Palettierer entsprechend dem Patentanspruch 1 ausgebildet.

Durch die erfindungsgemäße Ausgestaltung eines Palettierers ist es möglich, die zur Stabilisierung des jeweils gebildeten Stapels verwendeten Zwischenlagen maschinell mit einem Hilfsgreifer einzubringen, der durch einen Antrieb lediglich in einer einzigen Achsrichtung, nämlich in der vertikalen Achse relativ zum Greiferschlitten gesteuert bewegt werden muss.

Weiterbildungen der Erfindung sind Gegenstand der Unteransprüche. Die Erfindung wird im Folgenden anhand der Figuren an einem Ausführungsbeispiel näher erläutert. Es zeigen;
- Fig. 1: einen erfindungsgemäßen Portal-Palettierer in Seitenansicht;
- Fig. 2: den Palettierer der Figur 1 in Stirnansicht, und zwar in einer Blickrichtung entsprechend dem Pfeil A der Figur 1;
- Fig. 3: den Palettierer der Figur 1 in Draufsicht.

Zum besseren Verständnis sind in den Figuren jeweils die drei senkrecht zueinander verlaufenden Raumachsen angegeben, und zwar die horizontale X-Achse, die ebenfalls horizontale Y-Achse und die vertikale Z-Achse.

Der in den Figuren allgemein mit 1 bezeichnete Portal-Palettierer dient bei der dargestellten Ausführungsform dazu, auf Transportpaletten 2 Stapel 3 aus mehreren Stapel- oder Gebindelagen 3.1 zu bilden, die ihrerseits aus mehren Gebinden 4 bestehen. Die Gebinde 4 sind bei der dargestellten Ausführungsform jeweils von mehreren zu einer Gruppe zusammengestellten und mit einer Schrumpffolie, zu dem jeweiligen Gebinde zusammengefassten Flaschen, z.B. PET-Flaschen, oder anderen Behältern gebildet. Zwischen zwei im Stapel 3 in Richtung der Z-Achse aufeinander folgenden Lagen 3.1 ist jeweils eine Zwischenlage 5 aus einem Flachmaterial, beispielsweise aus Karton eingebracht, wobei die Zwischenlagen 5 u.a. zur Stabilisierung des jeweiligen Stapels 3 auf der Transportpalette 2 dienen.

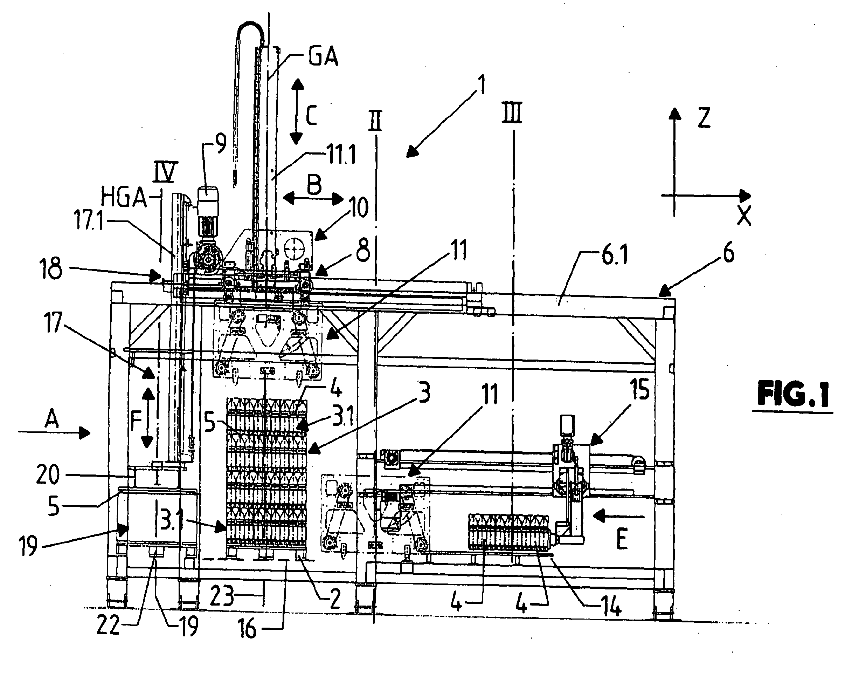

Der Palettierer 1 besteht u.a. aus einem Vorrichtungs- oder Rahmengestell 6, welches im Wesentlichen aus mehreren in horizontaler Richtung bzw. in vertikaler Richtung orientierten Stahlprofilen gefertigt und bei der dargestellten Ausführungsform in Draufsicht rechteckförmig ausgebildet ist, wobei die längere Seite des Rahmengestells 6 in der X-Achse orientiert ist. An zwei sich in Richtung der X-Achse erstreckenden parallelen Führungen 7, die an jeweils einem oberen, horizontalen Rahmenelement 6.1 vorgesehen sind, ist ein Greiferschlitten 8 in der X-Achse verschiebbar geführt, und zwar zwischen einer Abgabeposition, die bzw. deren Achse in der Figur 1 mit I bezeichnet ist, und einer Aufnahmeposition, die bzw. deren Achse in der Figur 1 mit II bezeichnet ist. Für die gesteuerte Bewegung des Greiferschlittens 8 in der X-Achse (Doppelpfeil B) ist am Greiferschlitten ein gesteuerter Antrieb 9 vorgesehen.

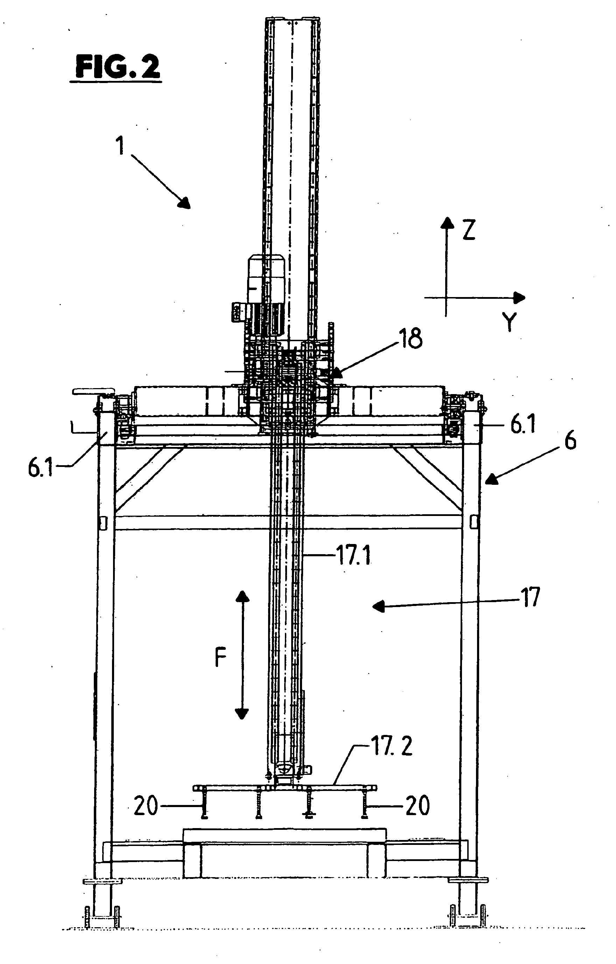

Ein weiterer, in der Figur 1 allgemein mit 10 bezeichneter Antrieb dient zum Bewegen eines in vertikaler Richtung am Greiferschlitten 8 geführten Greifers 11, d.h. zum gesteuerten Anheben und Absenken des Greifers 11 in der Z-Achse, wie dies in den Figuren 1 und 2 mit dem Doppelpfeil C angedeutet ist. Der Greifer 11 ist am Greiferschlitten 8 mit einem sich in der Z-Achse erstreckenden Arm oder Greiferelement 11.1 geführt, dessen Längserstreckung zugleich auch die Mittelachse oder Greiferachse GA des Greifers 11 bildet.

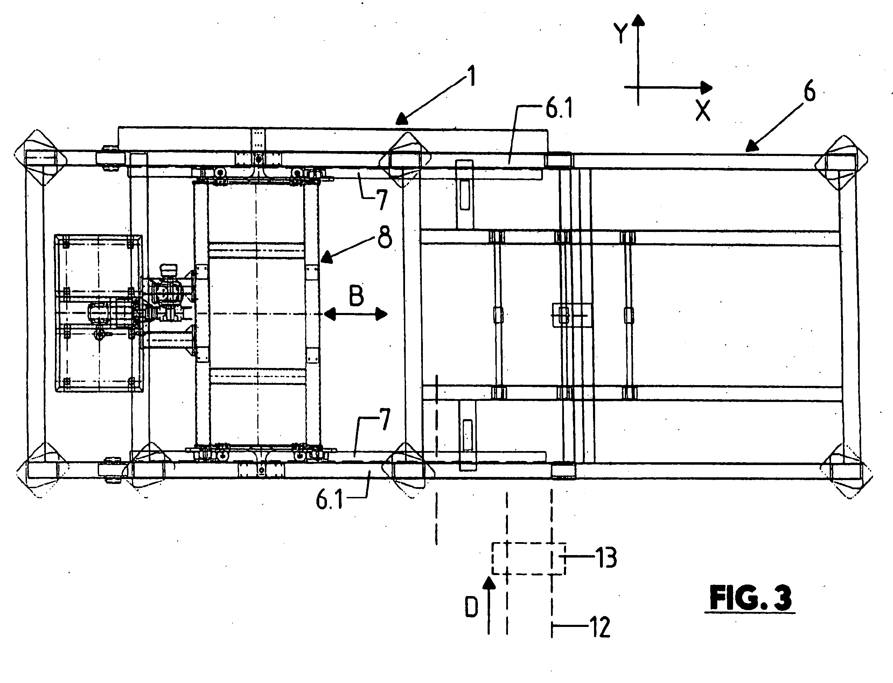

Zur Bildung des Gebindestapels 3 werden die einzelnen Gebinde 4 über einen in der Figur 3 schematisch mit 12 angedeuteten Transporteur und beispielsweise über eine ebenfalls schematisch angedeutete Drehvorrichtung 13 zum gesteuerten Drehen von jeweils einigen Gebinde 4 um ihre vertikale Achse einem innerhalb des Rahmengestells 6 vorgesehenen Bereitstellungs- und Übergabetisch 14 des Palettierers 1 zugeführt, auf dem die Gebinde 4 jeweils zu einer Gebindelage 3.1 zusammengestellt werden und der eine beispielsweise aus Rollen bestehende horizontale Standfläche für die Gebinde 4 bzw. die Gebindelage 3.1 bildet.

Ist eine Gebindelage 3.1 vollständig gebildet, so wird diese mittels einer gesteuert in Richtung der X-Achse bewegbaren Schieberanordnung 15 (Pfeil E) in den am Übergabetisch 14 bzw. in der Aufnahmeposition II bereitstehenden, geöffneten Greifer 11 hineinbewegt. Nach dem Schließen des Greifers 11 wird die Gebindelage 3.1 mit dem Greifer in vertikaler Richtung X-Achse angehoben und nach dem Verfahren des Greiferschlittens 8 in Abgabe- oder Stapelposition I auf die dort auf einem Transporteur 16 bereitstehende Transportpalette 2 als unterste Gebindelage 3.1 oder aber auf eine Zwischenlage 5 über einer bereits in einem vorausgegangenen Arbeitstakt abgesetzten Gebindelage 3.1 aufgebracht. Nach dem Absetzen jeder Gebindelage 3.1 wird der Greifer 11 durch Anheben, durch Verfahren des Greiferschlittens 8 und durch abschließendes Absenken wieder in die Aufnahmeposition 11 zurückbewegt, und zwar zur Aufnahme einer weiteren, auf dem Bereitstellungstisch 14 gebildeten Gebindelage 3.1.

Ein Palettierer der vorstehend beschriebenen Art ist grundsätzlich bekannt. Die Besonderheit des Palettierers 1 besteht nun darin, dass am Greiferschlitten 8 ein zusätzlicher Greifer oder Hilfsgreifer 17 vorgesehen ist, der durch einen Antrieb 18 gesteuert in der Z-Achse auf- und abbewegbar ist, und mit dem die an einer Aufgabeposition IV als Stapel 19 auf einer Transportpalette 2 bereitgestellten Zwischenlagen 5 jeweils einzeln entnommen und auf eine in der Abgabeposition 1 abgesetzten Gebindelage 3.1 aufgelegt werden. Die Zwischenlagen 5 besitzen bei der dargestellten Ausführungsform der Ausbildung der Gebindelagen 3.1 entsprechend einen rechteckförmigen Zuschnitt. Die Aufgabeposition IV befindet sich an der der Aufnahmeposition II abgewandten Seite der Abgabe- oder Stapelposition I.

Der Hilfsgreifer 17, der ebenso wie der Greifer 11 mit einem in der Z-Achse orientierten Arm oder Greiferelement 17.1 starr am Greiferschlitten 8 geführt ist, besitzt weiterhin ein bei der dargestellten Ausführungsform rahmenartiges Greiferelement 17.2, welches am unteren Ende des Greiferelementes 17.1 befestigt ist und mehrere, über die Unterseite wegstehende Greifer- oder Saugköpfe 20 aufweist, und zwar zum Abnehmen jeweils der obersten Zwischenlage 5 aus dem Stapel 19. Mit HGA ist in der Figur 1 die vertikale Achse des Hilfsgreifers 17 angegeben, die die Mittelachse des Greiferelementes 17.2 und bei in der Aufgabeposition IV befindlichem Hilfsgreifer 17 achsgleich mit der vertikalen Mittelachse Z₁₉ des Stapels 19 ist.

Befindet sich der Greifer 11 in der Abgabeposition 1, so liegt die Greiferachse GA achsgleich mit der vertikalen Mittelachse Z₃ der Transportpalette 2 bzw. des auf der Transportpalette 2 zu bildenden Stapels 3. Die beiden Achsen GA und HGA besitzen einen Achsabstand der gleich dem Achsabstand der beiden Achsen Z₃ und Z₁₉ ist. Weiterhin sind die vorgenannten Achsen in einer gemeinsamen vertikalen XZ-Ebene angeordnet. Durch diese Ausbildung ist es möglich, das immer dann, wenn der Greifer 11 an die Abgabe- oder Stapelposition I zurückbewegt ist, durch entsprechendes Ansteuern und Bewegen des Hilfsgreifers 17 in der Z-Achse vom Stapel 19 die oberste Zwischenlage 5 abgenommen und dann nach dem Bewegen des Greifers 11 bzw. des Greiferschlittens 8 in die Aufnahmeposition II mit dem Hilfsgreifers 17 auf die oberste Gebindelage 3.1 an der Stapelposition I aufgelegt wird.

Für das Entnehmen und Auflegen der Zwischenlagen 5 ist eine gesteuerte Bewegung des Hilfsgreifers 16 nur in einer einzigen Achsrichtung, nämlich in der Z-Achse erforderlich, wodurch sich trotz des maschinellen Handlings der Zwischenlagen 5 eine besonders einfache und auch betriebssichere Konstruktion ergibt.

Zur Steuerung der Abwärtsbewegung des Hilfsgreifers 17 weist dieser wenigstens einen Sensor, beispielsweise in Form eines Endschalters auf, der immer dann anspricht und dadurch die Abwärtsbewegung des Hilfsgreifers 17 stoppt, wenn die Greiferköpfe 20 gegen die oberste Zwischenlage 5 im Stapel 19 oder aber die am Hilfsgreifer 17 gehaltene Zwischenlage 5 gegen die oberste Gebindelage 3.1 an der Stapelposition I zur Anlage kommt. Der wenigstens eine Sensor wirkt dabei beispielsweise mit mindestens einem verschiebbaren oder gefederten Greiferkopf 20 zusammen.

Nach Bildung des kompletten Stapels 3 wird die Transportpalette 2 mit dem Stapel 3 über den Transporteur 16 aus dem Palettierer 1 herausbewegt.

Die Erfindung wurde voranstehend an einem Ausführungsbeispiel beschrieben. Es versteht sich, dass zahlreiche Änderungen sowie Abwandlungen möglich sind, ohne das dadurch der der Erfindung zugrunde liegende Erfindungsgedanke verlassen wird.

So ist es beispielsweise möglich anstelle von mehreren Antrieben 9, 10 und 18 am Greiferschlitten 8 einen für mehrere Funktionen gemeinsamen Antrieb vorzusehen, wobei die einzelnen Funktionen oder Bewegungen dann über steuerbare Antriebsstränge, beispielsweise steuerbare Kupplungen gesteuert werden.

### Bezugszeichenliste

- 1: Palettierer
- 2: Transportpalette
- 3: Gebindestapel
- 3.1: Stapel- oder Gebindelage
- 4: Gebinde
- 5: Zwischenlage aus Flachmaterial, beispielsweise Karton
- 6: Rahmengestellt
- 6.1: Rahmenelement
- 7: Führung
- 8: Greiferschlitten
- 9, 10: Antrieb
- 11: Greifer
- 11.1: Greiferelement
- 12: Transporteur
- 13: Drehvorrichtung
- 14: Bereitstellungstisch
- 15: Schiebeanordnung
- 16: Transporteur
- 17: Hilfsgreifer
- 17.1: Greiferelement
- 17.2: Greiferrahmen
- 18: Antrieb
- 19: Stapel aus Zwischenlagen 5
- 20: G reifer- oder Saugkopf

- A: Blickrichtung
- B: Bewegung des Greiferschlittens
- C: Hubbewegung des Greifers 11
- D: Transportrichtung der Gebinde auf dem Transporteur 12
- E: Bewegung der Schieberanordnung 15
- F: Hub des Hilfsgreifers 17
- Z₃: Mittelachse des Stapels 3 an der Abgabeposition I
- Z₁₉: Mittelachse des Stapels 19
- GA: Achse des Greifers 11
- HGA: Achse des Hilfsgreifers 17

- I: Stapel- oder Abgabeposition
- II: Aufnahmeposition
- III: Bereitstellungsposition
- IV: Aufnahmeposition für Zwischenlagen 5

## Patentansprüche

1. Palettierer, insbesondere Portal-Palettierer, zum Bilden von Stapeln (3) aus Verpackungseinheiten (4) auf Paletten, beispielsweise Transportpaletten (2), wobei der Stapel (3) aus mehreren in vertikaler Richtung übereinander angeordneten Stapellagen (3.1) und aus jeweils zwischen zwei Lagen (3.1) angeordneten Zwischenlagen (5) besteht, mir einem an einem Greiferschlitten (8) vorgesehenen Greifer (11), der mit dem Greiferschlitten (8) in horizontaler Richtung (X-Achse) zwischen der Stapel- oder Abgabeposition (I) und einer Aufnahmeposition (II) sowie zugleich auch am Greiferschlitten (8) in vertikaler Richtung (Z-Achse) gesteuert bewegbar ist,
wobei an einer der Aufnahmeposition (II) abgewandten Seite der Abgabeposition (I) eine Aufgabeposition (IV) zur Bereitstellung der Zwischenlagen (5) als Zwischenlagenstapel (19) vorgesehen ist,
wobei am Greiferschlitten (8) in vertikaler Richtung (Z-Achse) gesteuert bewegbar ein Hilfsgreifer (17) zum Abnehmen jeweils einer Zwischenlage (5) von dem Zwischenlagenstapel (19) und zum Auflegen dieser Zwischenlage (5) auf einer Stapellage (3, 1) an der Stapelposition (1) vorgesehen ist,
wobei der Achsabstand zwischen der vertikalen Achse (GA) des Greifers (11) und der vertikalen Achse (HGA) des Hilfsgreifers (17) gleich oder etwa gleich dem Achsabstand zwischen der Stapelposition (1) bzw. der vertikalen Achse (Z₃) des dort zu bildenden Stapels (3) aus Verpackungseinheiten (4) und der Aufsabeposition (IV) bzw. der vertikalen Achse (Z₁₉) des dortigen Zwischenlagenstapels (19) ist, wobei der Hilfsgreifer (17) ein Greiferelement (17.2) aufweist, wobei dieses Greiferelement (17.2) an unteren Ende eines am Greiferschlitten (8) in der vertikalen Achse (Z-Achse) geführten Arm (17.1) vorgesehen ist, und
wobei die vertikale Achse (HGA) des Hilfsgreifens (17) die vertikale Mittelachse des Greiferelements (17.2) ist, **dadurch gekennzeichnet**
**dass** der Arm (17.1) des Hilfsgreifers (17) mit seiner vertikalen Achse gegenüber der vertikalen Achse (HGA) des Hilfsgreifers (1 7) versetzt ist, und zwar in Richtung der Greiferachse (GA).

2. Palettierer nach Anspruch 1, **dadurch gekennzeichnet, dass** das Greiferelement (17.2) mehrere, vorzugsweise als Saugköpfe ausgebildete Greiferköpfe (20) aufweist.

3. Palettierer nach Anspruch 1 oder 2, **dadurch gekennzeichnet, dass** der Hilfsgreifer (17) wenigstens ein Sensorelement aufweist, mit dem die Abwärtsbewegung des Greiferelements (17.2) bzw. der Greiferköpfe (20) dann gestoppt wird, wenn das Greiferelements (17.2) bzw. dessen Greiferköpfe (20) gegen eine Zwischenlage (5) im Zwischenlagenstapel (19) oder aber eine mit dem Hilfsgreifer (17) mitbewegte Zwischenlage (5) gegen eine Stapellage (3.1) an der Stapelposition (I) zur Anlage kommt.

4. Palettierer nach Anspruch 3, **dadurch gekennzeichnet, dass** der Sensor von wenigstens einem, vorzugsweise gefederten Greiferkopf (20) gebildet ist.

5. Palettierer nach einem der vorhergehenden Ansprüche, **dadurch gekennzeichnet, dass** das Greiferelement (17.2) als Greiferrahmen, an dem mehrere Greiferköpfe (20) vorgesehen sind, ausgebildet ist.

6. Palettierer nach einem der vorhergehenden Ansprüche, **dadurch gekennzeichnet, dass** die vertikalen Achsen (GA, HGA) des Greifers (11) und des Hilfsgreifers (17) in einer auch die horizontale Bewegungsachse (X-Achse) des Greifers (11) oder Greiferschlittens (8) einschließenden vertikalen Ebene (XZ-Ebene) angeordnet sind.

7. Palettierer nach einem der vorhergehenden Ansprüche, **dadurch gekennzeichnet, dass** der Hilfsgreifer (17) ausschließlich in der vertikalen Achse (Z-Achse) am Greiferschlitten (8) verschiebbar vorgesehen ist.

8. Palettierer nach einem der vorhergehenden Ansprüche, **dadurch gekennzeichnet, dass** der Greiferschlitten (8) ausschließlich in einer einzigen horizontalen Achsrichtung (X-Achse) gesteuert bewegbar an einem Rahmengestellt (6) des Palettierers (1) vorgesehen ist.

## Claims

1. Palletiser, more particularly a portal palletiser, for forming stacks (3) of packing units (4) on pallets, by way of example transport pallets (2) wherein the stack (3) consists of several stacked layers (3.1) arranged vertically one above the other, and of intermediate layers (5) arranged between each two layers (3.1), with a gripper (11) which is provided on a gripper slide (8) and is movable with the gripper slide (8) in a horizontal direction (X-axis) between the stacking or delivery position (I) and a pick-up position (II) as well as also at the same time vertically (Z-axis) in controlled manner on the gripper slide (8),
wherein on a side of the delivery position (I) remote from the pick-up position (II) there is a feed position (IV) for preparing the intermediate layers (5) as the intermediate layer stack (19),
wherein a secondary gripper (17) movable in controlled manner vertically on the gripper slide (8) is provided for removing each one intermediate layer (5) from the intermediate layer stack (19) and for placing this intermediate layer (5) down on a stacked layer (3.1) at the stacking position (I),
wherein the axial distance between the vertical axis (GA) of the gripper (11) and the vertical axis (HGA) of the secondary gripper (17) is equal or roughly equal to the axial distance between the stacking position (I) or the vertical axis (Z₃) of the stack (3) of packing units (4) remaining there and the feed position (IV) or vertical axis (Z₁₉) of the intermediate layer stack (19) there, wherein the secondary gripper (17) has a gripper element (17.2) wherein this gripper element (17.2) is provided at the lower end of an arm (17.1) guided on the gripper slide (8) in the vertical axis (Z-axis), and wherein the vertical axis (HGA) of the secondary gripper (17) is the vertical centre axis of the gripper element (17.2),
**characterised in that** the arm (17.1) of the secondary gripper (17) is off-set by its vertical axis from the vertical axis (HGA) of the secondary gripper (17), namely in the direction of the gripper axis (GA).

2. Palletiser according to claim 1 **characterised in that** the gripper element (17.2) has several gripper heads (20), preferably designed as suction heads.

3. Palletiser according to claim 1 or 2 **characterised in that** the secondary gripper (17) has at last one sensor element with which the downward movement of the gripper element (17.2) or the gripper heads (20) is stopped when the gripper element (17.2) or its gripper heads (20) comes to bear against an intermediate layer (5) in the intermediate layer stack (19) or however an intermediate layer (5) which is moved along with the secondary gripper (17) comes to bear against a stacked layer (3.1) at the stacking position (I).

4. Palletiser according to claim 3 **characterised in that** the sensor is formed by at least one, preferably sprung, gripper head (20).

5. Palletiser according to one of the preceding claims **characterised in that** the gripper element (17.2) is designed as a gripper frame on which several gripper heads (20) are provided.

6. Palletiser according to one of the preceding claims **characterised in that** the vertical axes (GA, HGA) of the gripper (11) and the secondary gripper (17) are arranged in a vertical plane (XZ-plane) which also includes the horizontal axis of movement (X-axis) of the gripper (11) or gripper slide (8).

7. Palletiser according to one of the preceding claims **characterised in that** the secondary gripper (17) is provided displaceable solely in the vertical axis (Z-axis) on the gripper slide (8).

8. Palletiser according to one of the preceding claims **characterised in that** the gripper slide (8) is provided on a framework (6) of the palletiser (11) for controlled movement solely in a single horizontal axial direction (X-axis).

## Revendications

1. Palettiseur, en particulier palettiseur du type portique, pour la constitution de piles (3) d'unités d'emballage (4) sur des palettes, par exemple des palettes de transport (2), la pile (3) étant constituée de plusieurs couches de pile (3.1) disposées les unes sur les autres dans le sens vertical, et de deux couches intermédiaires (5) disposées à chaque fois entre deux couches (3.1), avec un grappin (11) prévu sur un chariot de grappin (8), déplaçable de façon commandée, avec le chariot de grappin (8), dans le sens horizontal (axe X) entre la position d'empilage ou de dépôt (I) et une position de réception (II), ainsi que dans le sens vertical (axe Z), également sur le chariot de grappin (8),
dans lequel une position de chargement (IV) pour la mise à disposition des couches intermédiaires (5) en tant que pile de couches intermédiaires (19) est prévue d'un côté de la position de dépôt (I) qui est détourné de la position de réception (II),
dans lequel un grappin auxiliaire (17), déplaçable de façon commandée dans le sens vertical (axe Z) sur le chariot de grappin (8) et destiné au retrait d'une couche intermédiaire (5) sur la pile de couches intermédiaires (19) et au dépôt de cette couche intermédiaire (5) sur une couche de pile (3.1), est prévu sur la position d'empilage (I),
dans lequel l'écart axial entre l'axe vertical (GA) du grappin (11) et l'axe vertical (HGA) du grappin auxiliaire (17) est égal ou quasiment égal à l'écart axial entre la position d'empilage (I) ou l'axe vertical (Z3) de la pile (3) d'unités d'emballage (19) à constituer à cet endroit, et la position de chargement (IV) ou l'axe vertical (Z19) de la pile de couches intermédiaires (19) à cet endroit,
dans lequel le grappin (17) comporte un élément de préhension (17.2), cet élément de préhension (17.2) étant prévu à l'extrémité inférieure d'un bras (17.1) guidé dans l'axe vertical (axe Z) sur le chariot de grappin (8), et
dans lequel l'axe vertical (HGA) du grappin auxiliaire (17) est l'axe médian de l'élément de préhension (17.2),
**caractérisé en ce que**
le bras (17.1) du grappin auxiliaire (17) est décalé avec son axe vertical par rapport à l'axe vertical (HGA) du grappin auxiliaire (17), notamment dans la direction de l'axe de grappin (GA).

2. Palettiseur selon la revendication 1, **caractérisé en ce que** l'élément de préhension (17.2) comporte plusieurs têtes de préhension (20), de préférence conçues comme des ventouses.

3. Palettiseur selon la revendication 1 o u2, **caractérisé en ce que** le grappin auxiliaire (17) comporte au moins un élément de détection, permettant de stopper le mouvement descendant de l'élément de préhension (17.2) ou des ventouses (20) lorsque l'élément de préhension (17.2) ou ses ventouses (20) s'applique contre une couche intermédiaire (5) dans la pile de couches intermédiaires (19) ou lorsqu'une couche intermédiaire (5) déplacée ensemble avec le grappin auxiliaire (17) s'applique contre une couche de pile (3.1) sur la position d'empilage (I).

4. Palettiseur selon la revendication 3, **caractérisé en ce que** le détecteur est formé par au moins une tête de préhension (20), de préférence montée sur ressorts.

5. Palettiseur selon l'une des revendications précédentes, **caractérisé en ce que** l'élément de préhension (17.2) est formé comme un cadre de grappin, sur lequel sont prévues plusieurs têtes de préhension (20).

6. Palettiseur selon l'une des revendications précédentes, **caractérisé en ce que** les axes verticaux (GA, HGA) du grappin (11) et du grappin auxiliaire (17) sont disposés dans un plan vertical (plan XZ) incluant également l'axe de déplacement horizontal (axe X) du grappin (11) ou du chariot de grappin (8).

7. Palettiseur selon l'une des revendications précédentes, **caractérisé en ce que** le grappin auxiliaire (17) est prévu de façon déplaçable exclusivement dans l'axe vertical (axe Z) sur le chariot de grappin (8).

8. Palettiseur selon l'une des revendications précédentes, **caractérisé en ce que** le chariot de grappin (8) est déplaçable de façon commandée, exclusivement dans une unique direction axiale horizontale (axe X), sur un châssis de cadre (6) du palettiseur (1).
